(19) Europäisches Patentamt / European Patent Office / Office européen des brevets

(11) **EP 3 121 663 B1**

(12) **FASCICULE DE BREVET EUROPEEN**

(45) Date de publication et mention
de la délivrance du brevet:
**03.03.2021   Bulletin 2021/09**

(51) Int Cl.:
***G04D 7/00*** *(2006.01)*

(21) Numéro de dépôt: **15177825.5**

(22) Date de dépôt: **22.07.2015**

(54) **PROCÉDÉ DE CONTRÔLE DE L'ÉTANCHÉITÉ D'UNE PIÈCE D'HORLOGERIE**

VERFAHREN ZUR DICHTHEITSKONTROLLE EINER UHR

METHOD FOR CHECKING THE TIGHTNESS OF A TIMEPIECE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**25.01.2017   Bulletin 2017/04**

(73) Titulaire: **ROLEX SA
1211 Genève 26 (CH)**

(72) Inventeur: **DUPERTUIS, Jean-Samuel
1201 Genève (CH)**

(74) Mandataire: **Moinas & Savoye SARL
19A, rue de la Croix-d'Or
1204 Genève (CH)**

(56) Documents cités:
**FR-A1- 2 158 061     US-A- 3 991 622**

## Description

L'invention concerne un procédé de contrôle de l'étanchéité d'une pièce d'horlogerie, comme une montre et plus particulièrement une montre-bracelet. Elle concerne aussi un procédé de fabrication d'une pièce d'horlogerie qui met en oeuvre ce procédé de contrôle de son étanchéité, et la pièce d'horlogerie en tant que telle obtenue par ce procédé de fabrication. Enfin, l'invention concerne aussi un système de contrôle de l'étanchéité d'une pièce d'horlogerie qui met en oeuvre ce procédé de contrôle de son étanchéité.

L'étanchéité d'une pièce d'horlogerie est une caractéristique importante, et il existe pour cela des normes internationales ISO 22810 et ISO 6425 qui définissent différentes exigences d'étanchéité, respectivement pour les montres simplement étanches et pour les montres de plongée.

L'état de la technique décrit différentes solutions pour mesurer l'étanchéité d'une pièce d'horlogerie, consistant à disposer la pièce d'horlogerie dans une enceinte fermée dans laquelle elle est mise sous-pression, et dans laquelle des caractéristiques mécaniques sont mesurées, comme cela est par exemple décrit dans le document US3991622. Un procédé de contrôle de l'étanchéité d'une pièce d'horlogerie exploitant l'influence de la pression de l'air entourant le mouvement d'horlogerie sur la marche dudit mouvement est connu du document FR-A-2158061.

Les solutions de mesure d'étanchéité existantes sont toutefois insatisfaisantes. En effet, elles comprennent tout ou partie des inconvénients suivants :

- Elles nécessitent des équipements dédiés complexes, basés sur des composants sensibles disposés dans des cuves de mise sous pression ;
- Elles ne traitent les pièces qu'individuellement, selon une approche pièce par pièce ;
- Elles ne sont adaptées qu'à un type de pièce d'une géométrie donnée, et nécessitent des réglages complexes pour traiter une autre pièce d'une autre géométrie ;
- Elles ne sont pas adaptées à une production industrielle d'un nombre élevé de pièces et/ou de pièces de géométries différentes ;
- Elles ne sont fiables que pour une partie seulement des mesures d'étanchéité à effectuer, par exemple spécialisées soit pour la détection des petites fuites, soit pour la détection des grosses fuites.

Le but de l'invention est de fournir une autre solution de contrôle de l'étanchéité d'une pièce d'horlogerie, qui ne comprend pas les inconvénients de l'état de la technique.

Plus précisément, un premier objet de l'invention est de fournir une solution de contrôle de l'étanchéité d'une pièce d'horlogerie simple et fiable.

A cet effet, le contrôle de l'étanchéité d'au moins une pièce d'horlogerie comprend les étapes suivantes :

- Mesurer la marche de la pièce d'horlogerie soumise à une première pression extérieure, particulièrement la pression atmosphérique, pour obtenir une première valeur de marche de référence ;
- Mesurer la marche de la pièce d'horlogerie soumise à une seconde pression extérieure, avantageusement supérieure à la première pression extérieure, dans une enceinte de mise sous pression, pour obtenir une seconde valeur de marche, appelée par la suite « valeur de marche sous pression » ; les deux étapes (E1, E2) consistant à mesurer la marche de la pièce d'horlogerie comprennent la mesure de la différence temporelle entre deux valeurs d'affichage de la pièce d'horlogerie (E11, E12; E21, E22) fournies par deux relevés d'état (PE11, PE12; PE21, PE22) de la pièce d'horlogerie, mise en comparaison avec une durée (t1, t2) entre ces mêmes deux relevés d'états mesurée par une horloge de référence, pour obtenir des valeurs de marche moyenne de la pièce d'horlogerie.
- Comparer les valeurs de marche sous pression et de marche de référence pour en déduire ou non une faille de l'étanchéité en cas d'écart dépassant un seuil prédéfini.

L'invention est plus précisément définie par les revendications.

Ces objets, caractéristiques et avantages de la présente invention seront exposés en détail dans la description suivante d'un mode de réalisation particulier fait à titre non-limitatif en relation avec les figures jointes parmi lesquelles :

La figure 1 représente schématiquement les étapes du procédé de contrôle de l'étanchéité d'une pièce d'horlogerie selon un mode de réalisation de l'invention.

La figure 2 représente un schéma de principe du procédé selon le mode de réalisation de l'invention.

Les figures 3 et 4 représentent schématiquement la corrélation entre l'étanchéité et la marche d'une pièce d'horlogerie.

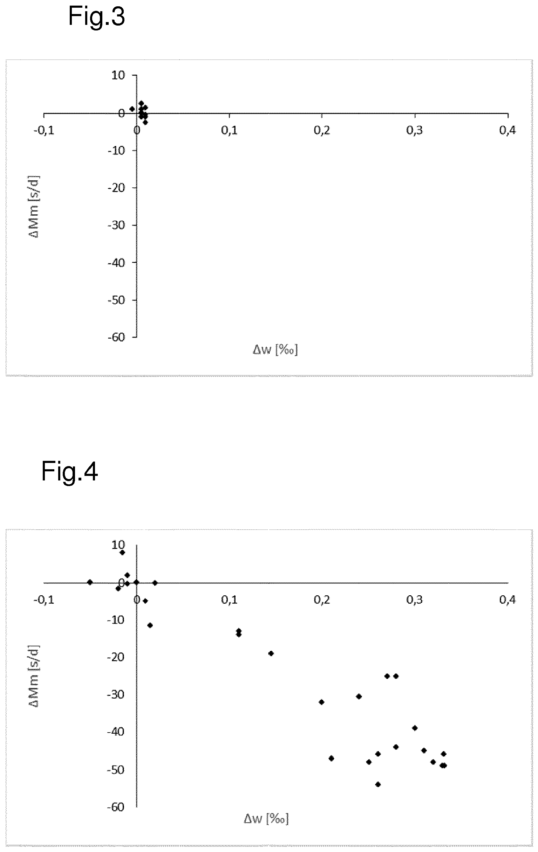

Le procédé de contrôle de l'étanchéité d'une pièce d'horlogerie selon l'invention exploite la relation existant entre la pression de l'air entourant un mouvement d'horlogerie et la marche dudit mouvement d'horlogerie, phénomène par exemple illustré par les figures 3 et 4 qui seront décrites par la suite. La marche est ici définie comme la différence, par unité de temps, entre deux états d'un instrument horaire, séparés par un intervalle de temps (durée) donné. Elle est couramment exprimée en secondes par jour [s/j] ; si elle est positive, l'instrument avance, et inversement, si elle est négative, l'instrument retarde.

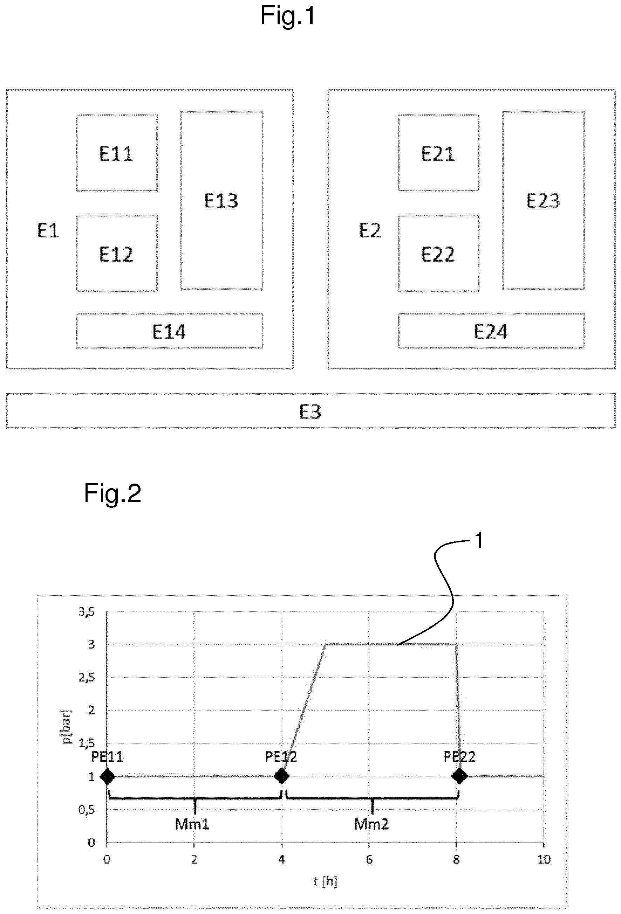

La figure 1 représente schématiquement les étapes d'un procédé de contrôle de l'étanchéité d'une pièce d'horlogerie selon un mode de réalisation de l'invention.

La première étape E1 consiste à mesurer la marche de la pièce d'horlogerie soumise à une première pression extérieure, avantageusement la pression atmosphérique. L'objectif de cette première étape consiste à établir une première valeur de marche de référence.

La seconde étape E2 consiste à mesurer la marche de la pièce d'horlogerie soumise à une seconde pression extérieure, de préférence supérieure à la première pression extérieure. Pour cela, la pièce d'horlogerie est disposée dans une enceinte de mise sous pression. L'objectif de cette seconde étape consiste à établir une seconde valeur de marche sous pression. En remarque, une variante pourrait consister à soumettre la pièce d'horlogerie à une pression inférieure à la première pression, dans une situation de sous-pression. Une autre variante peut consister en l'inversion des deux étapes E1, E2, dont l'ordre de réalisation est indifférent.

La troisième étape E3 consiste à comparer la marche sous pression avec la marche de référence, pour en déduire ou non une faille de l'étanchéité en cas de différence dépassant un seuil prédéfini. En effet, si la pièce d'horlogerie présente un défaut d'étanchéité, sa mise sous pression va se répercuter dans son volume intérieur, comprenant le mouvement horloger, et induire une modification de son fonctionnement, qui sera détecté par la seconde mesure de marche sous pression. Inversement, dans le cas d'une pièce d'horlogerie normalement étanche, la variation de pression extérieure entourant la pièce d'horlogerie n'a pas d'effet sur son fonctionnement et les deux mesures de marche issues des étapes E1 et E2 seront équivalentes.

Selon l'invention telle que revendiquée, les mesures de marche des deux premières étapes E1, E2 sont déterminées par une mesure de marche moyenne. Pour cela, ces étapes mesurent la marche d'une pièce d'horlogerie sur une durée relativement longue. Une durée minimale d'une heure permet avantageusement d'obtenir une mesure d'étanchéité fiable s'affranchissant des perturbations chronométriques intrinsèques à la pièce d'horlogerie testée.

Un mode de réalisation de l'invention calcule la marche sur une durée t1, t2 passée à une pression donnée en se basant sur la différence de temps calculée à partir de deux valeurs d'affichage de la pièce d'horlogerie fournies par deux relevés d'état de la pièce d'horlogerie, mise en comparaison avec la durée réellement écoulée prise sur une horloge de référence. Ainsi, chaque étape E1, E2 de mesure d'une valeur de marche comprend les sous-étapes suivantes :

- Une première sous-étape E11, E21 de première prise d'état PE11, PE21. Par prise d'état, nous entendons l'acquisition de l'heure affichée par la pièce d'horlogerie, par exemple au moyen d'une photographie donnant la configuration de l'aiguillage d'une pièce d'horlogerie, en particulier l'écart angulaire entre les différentes aiguilles, indexée par rapport à une horloge de référence ;

- Une seconde sous-étape E12, E22 de seconde prise d'état PE12, PE22 ;
- Une troisième sous-étape E13, E23 réalisée en parallèle de ces deux sous-étapes, de mesure de la durée exacte t1, t2 (notamment en heure(s), minute(s) et seconde(s)) entre les deux prises d'état, respectivement PE11, P12 et PE21, P22, à partir d'une horloge de référence ;
- Une quatrième sous-étape E14, E24 de calcul de la marche Mmi (i=1 dans la première étape E1 et i=2 dans la seconde étape E2) de la pièce d'horlogerie, par le calcul suivant :
  ∘

$$Mmi = (PEi2 - PEi1) / ti$$

Pour une durée ti inférieure ou égale à 24 heures, la marche ainsi calculée est convertie par une règle de trois de manière à pouvoir être conventionnellement exprimée en secondes par jour (s/j). Elle est appelée « marche diurne » dans le cas où ti est égale à 24 heures.

En remarque, durant ces durées de mesure t1, t2, la pièce d'horlogerie est positionnée selon un protocole bien défini. Ce même protocole est utilisé dans les deux étapes E1, E2. De plus, ces deux étapes E1, E2 peuvent être rapidement enchaînées, et il peut être avantageux de réaliser ce procédé avec PE21 = PE12, soit un total de trois prises d'état.

Dans le cas particulier de la seconde étape E2, les deux relevés d'état P21, P22 de la pièce d'horlogerie permettant de déterminer la marche moyenne Mm2 de la pièce d'horlogerie ayant subi une seconde pression extérieure sont réalisés avantageusement hors de l'enceinte de mise sous pression, donc respectivement avant l'insertion et après le retrait de la pièce d'horlogerie de l'enceinte de mise sous pression. Cette approche présente l'avantage de permettre l'utilisation d'une enceinte de mise sous pression très simple, puisqu'elle ne requiert pas d'outillage de mesure de marche. La mesure de marche moyenne permet avantageusement, par rapport à la mesure de marche instantanée, une détection de grosse fuite : même si l'air s'échappe quasi-instantanément de la montre lors de son retrait de l'enceinte de mise sous pression, l'avance ou le retard de marche pris sous pression pourra être appréhendé lors de la prise d'état PE22.

Dans cette approche, le second relevé d'état réalisé après le retrait de la pièce d'horlogerie de l'enceinte de mise sous pression intervient avantageusement rapidement après ce retrait, de préférence dans un délai inférieur ou égal à 30 minutes, voire même inférieur ou égal à 2 minutes.

De manière similaire au cas de fuite importante, en cas de faible fuite, une durée suffisamment longue de soumission à la pression élevée permettra de détecter la variation de marche par rapport à la marche à pression atmosphérique. Les durées t1, t2 sont donc avantageusement comprises entre 2 et 8 heures.

Selon le mode de réalisation du procédé, les relevés d'état comprennent des prises d'image de la configuration de l'aiguillage de la pièce d'horlogerie, en particulier l'écart angulaire entre les différentes aiguilles, notamment un premier angle entre une première aiguille des heures et une deuxième aiguille des minutes, ainsi qu'un deuxième angle entre une troisième aiguille des secondes et la première ou la deuxième aiguille, associées à l'heure donnée par une horloge de référence. Cette approche présente l'avantage de permettre la mise en œuvre d'une mesure automatique. En variante, une simple prise d'image peut être associée avec l'heure donnée par une horloge de référence, puis un traitement d'image, manuel ou informatique, peut convertir l'heure photographiée.

D'autre part, la seconde pression extérieure appliquée à une pièce d'horlogerie durant la seconde étape de mesure E2 est avantageusement comprise entre 2 et 5 bars. De plus, cette mise sous pression est de préférence lente, avantageusement à une vitesse moyenne de montée de la pression comprise entre 1 et 4 bar/heure, et/ou sur une période d'au moins une heure, pour permettre d'éviter que certaines fuites ne se referment sous l'effet d'une rapide augmentation de pression. Cette approche simule par exemple une immersion sous faible profondeur d'eau.

En variante de réalisation n'étant pas couverte par les revendications, les mesures de marche des deux premières étapes E1, E2 sont déterminées par une mesure de marche instantanée avec un chronoscope. Dans le cas de la seconde étape E2, cette mesure peut être faite directement au sein de l'enceinte de mise sous pression, voire en variante très rapidement après son retrait. Cette approche présente l'avantage d'une grande rapidité puisqu'elle ne nécessite plus la durée relativement longue nécessaire à la mesure de marche moyenne.

Ensuite, le procédé met en œuvre la troisième étape de comparaison des valeurs de marche mesurées aux deux étapes E1, E2, prenant par exemple en compte la différence $\Delta = Mm2 - Mm1$ entre les deux mesures de marche, puis la comparaison de la valeur absolue de cette différence $\Delta$ avec un seuil prédéfini. La valeur $\Delta$ est indirectement représentative de l'étanchéité de la pièce d'horlogerie, et peut donc être considérée comme une mesure de l'étanchéité. Le seuil est fixé à une valeur prédéfinie, selon l'exigence d'étanchéité souhaitée. Avantageusement, il peut être fixé à une valeur de 10 s/j.

La figure 2 résume ainsi le principe du mode de réalisation de l'invention, en illustrant par la courbe 1 l'évolution de la pression extérieure p à laquelle une pièce d'horlogerie est soumise en fonction du temps. Sur une première période, de 4 heures selon l'exemple de réalisation choisi, la valeur de marche de référence Mm1 est mesurée, à partir de deux relevés d'état PE11 et PE12, alors que la pièce d'horlogerie est positionnée dans un environnement à pression extérieure constante égale à la pression atmosphérique (1 bar). Sur une seconde période, de 4 heures selon l'exemple de réalisation choisi, la seconde valeur de marche Mm2 est mesurée, à partir de deux relevés d'état PE12 = PE21 et PE22, alors que la pièce d'horlogerie est positionnée dans un environnement à pression extérieure plus élevée, montant progressivement de 1 à 3 bars.

Selon le procédé de réalisation décrit précédemment, une enceinte de mise sous pression très simple peut être utilisée, comme mentionné précédemment, dont la seule fonction est la mise sous pression. Cette approche permet de prévoir un logement intérieur de grand volume pour y loger plusieurs pièces d'horlogerie, pour lesquelles le procédé de contrôle de l'étanchéité est mis en œuvre simultanément. Dans ce cas, un relevé d'état permettant la mesure de marche permet de préférence d'établir un relevé d'état simultané de plusieurs pièces d'horlogerie. En variante, ces relevés d'état sont quasi simultanés, permettant d'établir des relevés successifs à grande vitesse, par exemple par un balayage automatique permettant d'obtenir des prises d'image des différentes pièces d'horlogerie.

L'invention porte aussi sur un procédé de fabrication d'une pièce d'horlogerie, qui comprend, vers la fin d'un tel procédé, la mise en œuvre d'un procédé de contrôle de l'étanchéité de la pièce d'horlogerie tel que défini précédemment. Si le test est concluant, le procédé de fabrication est finalisé, sinon, une étape supplémentaire de correction d'étanchéité de la pièce d'horlogerie est mise en œuvre, avant de renouveler le procédé de contrôle de l'étanchéité.

Les figures 3 et 4 représentent la variation de marche $\Delta Mm$ de plusieurs pièces d'horlogerie en fonction de l'augmentation de leur poids $\Delta w$ lorsqu'elles sont positionnées pendant 24 heures sous une pression de 5 bars. En remarque, l'augmentation du poids survient nécessairement pour une pièce non étanche soumise à un tel conditionnement, à moins que la fuite ne soit très importante et que l'air ne s'en échappe très rapidement. Inversement, une pièce étanche conserve un poids inchangé. Sur la figure 3, toutes les pièces d'horlogerie sont étanches et leur poids n'augmente pas. On constate alors qu'elles ne subissent qu'une variation de marche induite par leurs propriétés chronométriques intrinsèques, soit une variation de marche mineure bien inférieure au seuil prédéfini permettant d'établir une faille d'étanchéité. Au contraire, les pièces illustrées sur la figure 4 comprennent de nombreuses failles d'étanchéité, à des degrés différents : on constate l'existence d'une corrélation entre la variation de marche et l'augmentation de poids, ce qui confirme bien l'existence d'une corrélation entre la variation de marche et la présence d'une faille d'étanchéité.

L'invention porte aussi sur un système de contrôle de l'étanchéité, qui permet la mise en œuvre du procédé de contrôle d'étanchéité décrit précédemment, de préférence de manière totalement automatisée, voire quasi automatisée. Pour cela, le système selon le mode de réalisation comprend les éléments suivants :

- Une enceinte de mise sous pression, comprenant un logement pour recevoir une ou plusieurs pièces d'horlogerie ;
- Un dispositif de mesure de marche d'une pièce d'horlogerie, comprenant par exemple un dispositif de prise d'images, par exemple photographique, pour réaliser les relevés d'état mentionnés. Ce dispositif comprend de préférence un mécanisme de relevés d'état de la pièce d'horlogerie, incluant un appareil optique de prise d'images ;
- Une horloge de référence, couplée ou au moins corrélée au dispositif de prise d'images ;
- Un calculateur, relié au dispositif de prise d'images et à l'horloge de référence, par un dispositif de communication, pour recevoir les données de relevés d'état et les heures prises sur l'horloge de référence associées et réaliser les calculs de valeurs de marche, ainsi que les comparaisons pour en déduire un diagnostic d'étanchéité ;
- Une mémoire électronique associée au calculateur pour mémoriser les données de relevés d'état et d'horloge et les résultats du procédé de contrôle d'étanchéité.

Le système peut aussi comprendre un dispositif de transfert permettant de transporter automatiquement chaque pièce d'horlogerie vers un logement à pression atmosphérique, vers l'enceinte de mise sous pression, et/ou vers les dispositifs de relevés d'état.

L'invention porte aussi sur une série de pièces d'horlogerie obtenue par le procédé de fabrication décrit précédemment, ainsi que sur une pièce d'horlogerie en tant que telle obtenue par un tel procédé de fabrication.

L'invention a été mise en œuvre sur une pièce d'horlogerie, qui peut être une montre, comme une montre bracelet. Elle peut naturellement être mise en œuvre sur tout élément même intermédiaire, comme une boîte de montre intégrant un mouvement horloger.

**Revendications**

1. Procédé de contrôle de l'étanchéité d'au moins une pièce d'horlogerie, **caractérisé en ce qu'**il comprend les étapes suivantes :

   E1 - Mesurer la marche de la pièce d'horlogerie soumise à une première pression extérieure, particulièrement la pression atmosphérique, pour obtenir une première valeur de marche de référence ;
   E2 - Mesurer la marche de la pièce d'horlogerie soumise à une seconde pression extérieure dans une enceinte de mise sous pression, pour obtenir une seconde valeur de marche sous pression ;
   les deux étapes (E1, E2) consistant à mesurer la marche de la pièce d'horlogerie comprenant la mesure de la différence temporelle entre deux valeurs d'affichage de la pièce d'horlogerie (E11, E12 ; E21,
   E22) fournies par deux relevés d'état (PE11, PE12 ; PE21, PE22) de la pièce d'horlogerie, mise en comparaison avec une durée (t1, t2) entre ces mêmes deux relevés d'états mesurée par une horloge de référence, pour obtenir des valeurs de marche moyenne de la pièce d'horlogerie ;
   E3 - Comparer les valeurs de marche sous pression et de marche de référence pour en déduire ou non une faille de l'étanchéité en cas d'écart dépassant un seuil prédéfini.

2. Procédé de contrôle de l'étanchéité selon la revendication précédente, **caractérisé en ce que** les relevés d'état (PE21 et PE22) de la pièce d'horlogerie permettant de déterminer la marche moyenne de la pièce d'horlogerie soumise à une seconde pression extérieure sont réalisés hors de l'enceinte de mise sous pression, avant l'introduction et après le retrait de la pièce d'horlogerie de l'enceinte de mise sous pression.

3. Procédé de contrôle de l'étanchéité selon la revendication précédente, **caractérisé en ce que** le relevé d'état réalisé après le retrait de la pièce d'horlogerie de l'enceinte de mise sous pression intervient dans un délai inférieur ou égal à 30 minutes.

4. Procédé de contrôle de l'étanchéité selon l'une des revendications précédentes, **caractérisé en ce que** les relevés d'état comprennent des prises d'image associées à l'heure donnée par une horloge de référence.

5. Procédé de contrôle de l'étanchéité selon l'une des revendications précédentes, **caractérisé en ce que** la durée entre deux relevés d'état de la pièce d'horlogerie est supérieure ou égale à une heure, voire comprise entre 2 et 8 heures.

6. Procédé de contrôle de l'étanchéité selon l'une des revendications précédentes, **caractérisé en ce que** l'étape consistant à mesurer la marche de la pièce d'horlogerie soumise à une seconde pression extérieure comprend la mise sous pression de la pièce d'horlogerie dans une enceinte de mise sous pression à une valeur maximale de seconde pression extérieure comprise entre 2 et 5 bars.

7. Procédé de contrôle de l'étanchéité selon l'une des revendications précédentes, **caractérisé en ce que** l'étape consistant à mesurer la marche de la pièce d'horlogerie soumise à une seconde pression extérieure comprend la mise sous pression lente de la pièce d'horlogerie dans une enceinte de mise sous pression, à une vitesse moyenne de montée de la pression comprise entre 1 et 4 bar/heure.

8. Procédé de contrôle de l'étanchéité selon l'une des revendications précédentes, **caractérisé en ce qu'**il comprend le contrôle de l'étanchéité de plusieurs pièces d'horlogerie simultanément, les pièces d'horlogerie se trouvant logées simultanément dans une enceinte de mise sous pression.

9. Procédé de fabrication d'une pièce d'horlogerie, **caractérisé en ce qu'**il comprend la mise en œuvre d'un procédé de contrôle de l'étanchéité de la pièce d'horlogerie selon l'une des revendications précédentes.

10. Système de contrôle de l'étanchéité d'une pièce d'horlogerie pour la mise en œuvre d'un procédé de contrôle de l'étanchéité d'une pièce d'horlogerie selon l'une des revendications 1 à 8, **caractérisé en ce qu'**il comprend un dispositif de mesure de la marche d'une pièce d'horlogerie comprenant un mécanisme de relevés d'état de la pièce d'horlogerie et une enceinte de mise sous pression définissant un logement de réception d'au moins une pièce d'horlogerie.

11. Système de contrôle de l'étanchéité d'une pièce d'horlogerie selon la revendication précédente, **caractérisé en ce que** le dispositif de mesure de la marche d'une pièce d'horlogerie est disposé en totalité hors de l'enceinte de mise sous pression.

12. Système de contrôle de l'étanchéité d'une pièce d'horlogerie selon la revendication 10 ou 11, **caractérisé en ce que** le logement au sein de l'enceinte de mise sous pression comprend un espace adapté au logement simultané de plusieurs pièces d'horlogerie.

13. Système de contrôle de l'étanchéité d'une pièce d'horlogerie selon l'une des revendications 10 à 12, **caractérisé en ce que** le dispositif de mesure de la marche d'une pièce d'horlogerie comprend un mécanisme de relevés d'état de la pièce d'horlogerie incluant un appareil optique de prise d'images couplé à une horloge de référence.

**Patentansprüche**

1. Verfahren zur Kontrolle der Dichtheit mindestens einer Uhr, **dadurch gekennzeichnet, dass** es die folgenden Schritte enthält:

   E1 - Messen des Gangs der Uhr, die einem ersten äußeren Druck ausgesetzt wird, insbesondere dem Atmosphärendruck, um einen ersten Bezugsgangwert zu erhalten;
   E2 - Messen des Gangs der Uhr, die einem zweiten äußeren Druck in einem Druckbeaufschlagungsbehälter ausgesetzt wird, um einen zweiten Gangwert unter Druck zu erhalten; wobei die zwei Schritte (E1, E2), die darin bestehen, den Gang der Uhr zu messen, das Messen des zeitlichen Unterschieds zwischen zwei Anzeigewerten der Uhr (E11, E12; E21, E22) enthalten, die von zwei Zustandsablesungen (PE11, PE12; PE21, PE22) der Uhr geliefert werden, verglichen mit einer Dauer (t1, t2) zwischen diesen zwei gleichen Zustandsablesungen, gemessen von einem Bezugstaktgeber, um mittlere Gangwerte der Uhr zu erhalten;
   E3 - Vergleichen der Werte des Gangs unter Druck und des Bezugsgangs, um daraus im Fall einer Abweichung, die eine vordefinierte Schwelle überschreitet, eine Schwachstelle der Dichtheit abzuleiten oder nicht.

2. Verfahren zur Dichtheitskontrolle nach dem vorhergehenden Anspruch, **dadurch gekennzeichnet, dass** die Zustandsablesungen (PE21 und PE22) der Uhr, die es ermöglichen, den mittleren Gang der einem zweiten äußeren Druck ausgesetzten Uhr zu bestimmen, außerhalb des Druckbeaufschlagungsbehälters vor der Einführung und nach dem Entfernen der Uhr aus dem Druckbeaufschlagungsbehälter durchgeführt werden.

3. Verfahren zur Dichtheitskontrolle nach dem vorhergehenden Anspruch, **dadurch gekennzeichnet, dass** die nach dem Entfernen der Uhr aus dem Druckbeaufschlagungsbehälter durchgeführte Zustandsablesung in einer Zeitspanne geringer als oder gleich 30 Minuten erfolgt.

4. Verfahren zur Dichtheitskontrolle nach einem der vorhergehenden Ansprüche, **dadurch gekennzeichnet, dass** die Zustandsablesungen Bildaufnahmen enthalten, die der durch einen Bezugstaktgeber vorgegebenen Uhrzeit zugeordnet sind.

5. Verfahren zur Dichtheitskontrolle nach einem der vorhergehenden Ansprüche, **dadurch gekennzeichnet, dass** die Dauer zwischen zwei Zustandsablesungen der Uhr länger als oder gleich einer Stunde ist, sogar zwischen 2 und 8 Stunden liegt.

**6.** Verfahren zur Dichtheitskontrolle nach einem der vorhergehenden Ansprüche, **dadurch gekennzeichnet, dass** der Schritt, der darin besteht, den Gang der Uhr zu messen, die einem zweiten äußeren Druck ausgesetzt ist, die Druckbeaufschlagung der Uhr in einem Druckbeaufschlagungsbehälter auf einen maximalen Wert eines zweiten äußeren Drucks zwischen 2 und 5 Bar enthält.

**7.** Verfahren zur Dichtheitskontrolle nach einem der vorhergehenden Ansprüche, **dadurch gekennzeichnet, dass** der Schritt, der darin besteht, den Gang der Uhr zu messen, die einem zweiten äußeren Druck ausgesetzt ist, die langsame Druckbeaufschlagung der Uhr in einem Druckbeaufschlagungsbehälter mit einer mittleren Anstiegsgeschwindigkeit des Drucks zwischen 1 und 4 Bar/Stunde enthält.

**8.** Verfahren zur Dichtheitskontrolle nach einem der vorhergehenden Ansprüche, **dadurch gekennzeichnet, dass** es die gleichzeitige Dichtheitskontrolle mehrerer Uhren enthält, wobei die Uhren gleichzeitig in einem Druckbeaufschlagungsbehälter untergebracht sind.

**9.** Verfahren zur Herstellung einer Uhr, **dadurch gekennzeichnet, dass** es die Durchführung eines Verfahrens zur Dichtheitskontrolle der Uhr nach einem der vorhergehenden Ansprüche enthält.

**10.** System zur Dichtheitskontrolle einer Uhr für die Durchführung eines Verfahrens zur Dichtheitskontrolle einer Uhr nach einem der Ansprüche 1 bis 8, **dadurch gekennzeichnet, dass** es eine Messvorrichtung des Gangs einer Uhr enthält, die einen Zustandsablesungsmechanismus der Uhr und einen Druckbeaufschlagungsbehälter enthält, der einen Aufnahmesitz mindestens einer Uhr definiert.

**11.** System zur Dichtheitskontrolle einer Uhr nach dem vorhergehenden Anspruch, **dadurch gekennzeichnet, dass** die Messvorrichtung des Gangs einer Uhr vollständig außerhalb des Druckbeaufschlagungsbehälters angeordnet ist.

**12.** System zur Dichtheitskontrolle einer Uhr nach Anspruch 10 oder 11, **dadurch gekennzeichnet, dass** die Aufnahme innerhalb des Druckbeaufschlagungsbehälters einen Raum enthält, der zur gleichzeitigen Aufnahme mehrerer Uhren geeignet ist.

**13.** System zur Dichtheitskontrolle einer Uhr nach einem der Ansprüche 10 bis 12, **dadurch gekennzeichnet, dass** die Messvorrichtung des Gangs einer Uhr einen Zustandsablesungsmechanismus der Uhr enthält, der ein optisches Bildaufnahmegerät gekoppelt mit einem Bezugstaktgeber enthält.

**Claims**

**1.** A method for testing the water resistance of at least one timepiece, **characterized in that** it comprises the following stages:

E1 - Measuring the rate of the timepiece when subjected to a first external pressure, in particular atmospheric pressure, in order to obtain a first reference rate value;
E2 - Measuring the rate of the timepiece when subjected to a second external pressure inside a pressurization chamber, in order to obtain a second rate value under pressure;
the two stages (E1, E2) involving measuring the rate of the timepiece comprising measuring the time-related difference between two display values for the timepiece (E11, E12; E21, E22) provided by two status reports (PE11, PE12; PE21, PE22) for the timepiece, compared with a time (t1, t2) between said same two status reports measured by a reference clock, in order to get average rate values of the timepiece;
E3 - Comparing the rate value under pressure and the reference rate value in order to deduce therefrom the presence or otherwise of a deficiency in the water resistance in the event of a variation in excess of a predefined threshold.

**2.** The method for testing the water resistance as claimed in the preceding claim, **characterized in that** the status reports (PE21 and PE22) for the timepiece enabling the average rate of the timepiece when subjected to a second external pressure to be determined are produced outside the pressurization chamber, before the introduction and after the removal of the timepiece from the pressurization chamber.

**3.** The method for testing the water resistance as claimed in the preceding claim, **characterized in that** the status report produced after the removal of the timepiece from the pressurization chamber is completed within a period of less than or equal to 30 minutes.

**4.** The method for testing the water resistance as claimed in one of the preceding claims, **characterized in that** the status reports comprise recorded images associated with the time indicated by a reference clock.

**5.** The method for testing the water resistance as claimed in one of the preceding claims, **characterized in that** the time between two status reports for the timepiece is greater than or equal to one hour, or is between 2 and 8 hours.

**6.** The method for testing the water resistance as claimed in one of the preceding claims, **characterized in that** the stage involving measuring the rate of the timepiece when subjected to a second external pressure comprises the pressurization of the timepiece inside a pressurization chamber at a maximum value for the second external pressure comprised between 2 and 5 bar.

**7.** The method for testing the water resistance as claimed in one of the preceding claims, **characterized in that** the stage involving measuring the rate of the timepiece when subjected to a second external pressure comprises the slow pressurization of the timepiece inside a pressurization chamber at an average rate of increase in the pressure comprised between 1 and 4 bar/hour.

**8.** The method for testing the water resistance as claimed in one of the preceding claims, **characterized in that** it comprises the testing of the water resistance of a plurality of timepieces simultaneously, the timepieces being housed simultaneously inside a pressurization chamber.

**9.** A method for manufacturing a timepiece, **characterized in that** it comprises the implementation of a method for testing the water resistance of the timepiece as claimed in one of the preceding claims.

**10.** A system for testing the water resistance of a timepiece for the implementation of a method for testing the water resistance of a timepiece as claimed in one of claims 1 to 8, **characterized in that** it comprises a device for measuring the rate of a timepiece comprising a mechanism for producing status reports of the timepiece and a pressurization chamber defining a mounting for accommodating at least one timepiece.

**11.** The system for testing the water resistance of a timepiece as claimed in the preceding claim, **characterized in that** the device for measuring the rate of a timepiece is disposed in its totality outside the pressurization chamber.

**12.** The system for testing the water resistance of a timepiece as claimed in claim 10 or 11, **characterized in that** the housing inside the pressurization chamber comprises a space adapted for the simultaneous housing of a plurality of timepieces.

**13.** The system for testing the water resistance of a timepiece as claimed in one of claims 10 to 12, **characterized in that** the device for measuring the rate of a timepiece comprises a mechanism for producing status reports for the timepiece including an optical image recording apparatus coupled to a reference clock.

# Fig.1

# Fig.2

Fig.3

Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3991622 A
- FR 2158061 A